# EUROPÄISCHE PATENTSCHRIFT

(11) **EP 1 616 771 B1**
(45) Veröffentlichungstag und Bekanntmachung des Hinweises auf die Patenterteilung: **19.03.2008**
(21) Anmeldenummer: 05405416.8
(22) Anmeldetag: 29.06.2005
(51) Int. Cl.: B61G 11/12, B61G 9/08, F16F 9/512

(54) **Puffer für Schienenfahrzeuge**
Buffer for railway vehicles
Tampon pour véhicules ferroviaires

(30) Priorität: 13.07.2004 CH 11852004
(43) Veröffentlichungstag der Anmeldung: 18.01.2006
(73) Patentinhaber: Schwab Verkehrstechnik AG, 8207 Schaffhausen (CH)
(72) Erfinder: Ziegler, Otto, 8240 Thayngen (CH)
(74) Vertreter: Rottmann, Maximilian

(56) Entgegenhaltungen:
- DE-A1- 10 140 553
- DE-B- 1 219 963
- US-A- 3 826 343

## Beschreibung

Die Erfindung betrifft einen Puffer für Schienenfahrzeuge nach dem Oberbegriff des Anspruchs 1.

Aus der US-A-5,160,123 ist ein gattungsgemässer Puffer bekannt. Nebst der am Fahrzeug zu befestigenden Pufferhülse und dem relativ dazu verschiebbaren Pufferstössel ist der Puffer auf der Vorderseite mit einem Pufferkopf versehen. Im Innern des Puffers ist eine hydraulische Kolben/Zylindereinheit angeordnet, die zwischen dem Pufferkopf und der dem Fahrzeug zuzuwendenden Stirnseite der Pufferhülse eingespannt ist. Die Kolben/Zylindereinheit ist mit einem Strömungsregelventil und einer Einrichtung zur Drosselung der Strömung des beim Einfedern verdrängten Hydraulikmediums versehen. Die genannte Einrichtung soll die maximal zulässige Anfangsgeschwindigkeit des Pufferstössels beim Einfedern bestimmen. Dazu ist die Einrichtung mit einem an der Pufferhülse abgestützten Dorn versehen, der beim Einfedern in die Öffnung einer Hülse eintaucht und damit einen Durchlassquerschnitt für das Hydraulikmedium begrenzt. Die Hülse ihrerseits ist verschiebbar und mittels einer Feder vorgespannt. Zudem weist sie eine radiale Durchlassöffnung für das aus der Kolben/Zylindereinheit verdrängte Hydraulikmedium auf. Sobald die Einschubgeschwindigkeit der Pufferhülse einen vorgegebenen Wert übersteigt, wird die Hülse durch den an ihrer Öffnung entstehenden Druckabfall entgegen der Federvorspannung verschoben und die radiale Durchlassöffnung entsprechend verkleinert. Damit wird auch die Einschubgeschwindigkeit der Pufferhülse reduziert.

Aus der EP-A-1 167 154 ist ebenfalls ein gattungsgemässer Puffer mit einer fahrzeugseitig zu fixierenden Hülse und einem relativ dazu verschiebbaren Stössel bekannt. In der Hülse ist ein sich mit zunehmender Einfederung des Stössels verkleinernder, mit Hydraulikmedium gefüllter Ölraum angeordnet, während der Stössel mit einem mittels eines Gases unter Überdruck gesetzten Gasraum versehen ist. Zwischen den beiden Räumen ist eine gas-hydraulische Regeleinrichtung angeordnet, die eine Ventilanordnung aufweist, welche letztere beim Einfedern des Stössels einen für das durchströmende Hydraulikmedium relevanten Durchlassquerschnitt in Abhängigkeit der auf den Stössel einwirkenden Energie verändert. Die Ventilanordnung ist mit einem Ventilkörper versehen, dessen eine Stirnfläche mit dem Ölraum und dessen andere Stirnfläche mit dem Gasraum in Wirkverbindung steht. Die mit dem Gasraum in Wirkverbindung stehende Stirnfläche ist dabei um ein Mehrfaches grösser ist als die dem Ölraum zugewandte Stirnfläche. Zum Verzögern der Schliessbewegung des Ventilkörpers sind Mittel vorgesehen, so dass die vom Stössel auf das Fahrzeug übertragene Beschleunigung einen vorgegebenen Maximalwert nicht überschreitet.

Schliesslich ist aus der US 3,826,343 eine Regelvorrichtung für hydraulische Stossdämpfer bekannt, welche sich für den Einsatz in Automobilen eignet. Diese Regelvorrichtung besteht aus einem Gehäuse, in dem eine Hochdruckkammer und eine Niederdruckkammer angeordnet ist. Zwischen diesen beiden Kammern ist ein Kolben angeordnet, der mittels einer Feder belastet ist. Der Kolben ist mit einer Druckkontrollkammer versehen. Zwischen der Druckkontrollkammer 36 und der Hochdruckkammer ist ein Tellerventil angeordnet, das mittels einer "Kalibrierfeder" in Schliessrichtung vorgespannt ist. Das Tellerventil ist mit Durchgangsbohrungen versehen, über welche sich der Druck auf der Rückseite des Tellerventils demjenigen auf der Vorderseite anpassen kann.

Die Aufgabe der Erfindung besteht nun darin, einen Puffer für Schienenfahrzeuge derart auszugestalten, dass der Kraftanstieg sowie die Maximalkraft beim Einfedern des Pufferstössels unabhängig vom Gesamthub des Pufferstössels gewählt werden können

Diese Aufgabe wird durch die im Kennzeichen des Anspruchs 1 angeführten Merkmale gelöst.

Bevorzugte Ausführungsformen der Erfindung sind in den abhängigen Ansprüchen 2 bis 17 umschrieben.

Die Erfindung wird nachfolgend anhand von Zeichnungen näher erläutert. Dabei zeigt:
Fig. 1 einen Längsschnitt durch einen schematisch dargestellten Puffer;
Fig. 2 das quasistatische und dynamische Einfederverhalten des Puffers anhand eines Kraft-Weg-Diagramms;
Fig. 3 einen Längsschnitt durch ein erstes alternatives Ausführungsbeispiel eines Puffers, und
Fig. 4 einen Längsschnitt durch ein zweites alternatives Ausführungsbeispiel eines Puffers.

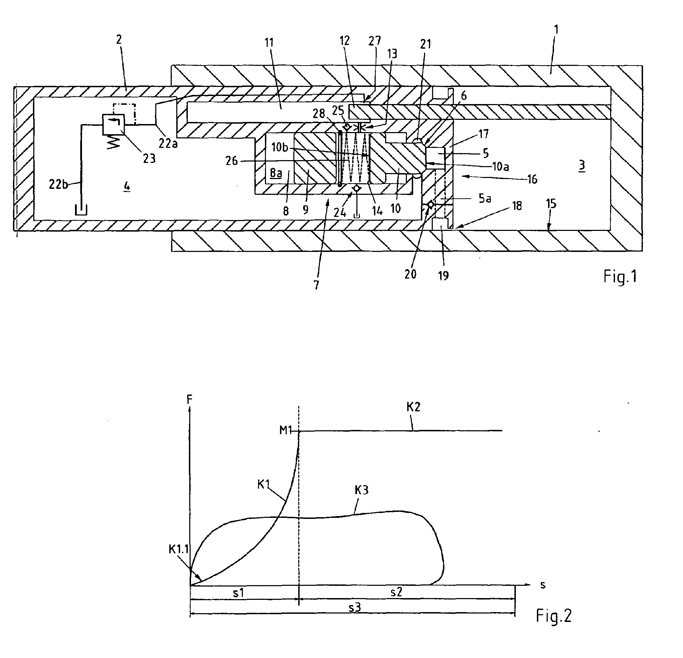

Der in der Fig. 1 im Ruhezustand gezeigte Puffer weist eine am Schienenfahrzeug (nicht dargestellt) zu befestigende Pufferhülse 1 sowie einen Pufferstössel 2 auf, welch letzterer auf der Vorderseite mit einem Pufferteller (nicht dargestellt) versehen ist. Sowohl die Pufferhülse 1 wie auch der verschiebbar darin aufgenommene Pufferstössel 2 sind im wesentlichen zylindrisch ausgebildet.

Der Puffer ist mit einer ersten, im Innern der Pufferhülse 1 angeordneten Kammer 3 sowie einer zweiten, im Innern des Pufferstössels 2 angeordneten Kammer 4 versehen. Die erste Kammer 3 ist praktisch vollständig mit einem Hydraulikmedium gefüllt, während die zweite Kammer 4 teilweise mit einem Hydraulikmedium gefüllt und mittels eines Gases unter Überdruck gesetzt ist. Mit zunehmender Einfederung des Pufferstössels 2 verkleinert sich die erste, in der Pufferhülse 1 angeordnete Kammer 3. Bei diesem Einfedervorgang dient die zweite Kammer 4 der Aufnahme des aus der ersten Kammer 3 verdrängten Hydraulikmediums. Die beiden Kammern 3, 4 sind über einen Durchlass 5 miteinander verbunden. Der Durchlass 5 ist auf der dem Innenraum des Pufferstössels 2 zugewandten Seite mit einem Ventilsitz 6 versehen ist. Zwischen dem Durchlass 5 und der im Pufferstössel 2 angeordneten Kammer 4 ist ein Ringraum 21 vorgesehen. Zum Verschliessen dieses Durchlasses 5 ist eine gesamthaft mit 7 bezeichnete Dämpfungseinrichtung vorgesehen. Die Dämpfungseinrichtung 7 umfasst eine mittels eines Gases unter Überdruck gesetzte Steuerkammer 8, in der ein Trennkolben 9 angeordnet ist. Der Raum 14 zwischen dem Trennkolben 9 und dem Steuerorgan 10 ist mit Hydraulikflüssigkeit gefüllt, so dass sich der in der Kammer 8 vorherrschende Druck auf den Steuerorgan 10 überträgt und letzteren in Schliessrichtung belastet. Auf diese Weise wird eine mit 8a bezeichnete Gasfeder zum Vorspannen des Steuerorgans 10 gebildet. Zum Begrenzen der nach rechts gerichteten Bewegung des Trennkolbens 9 ist in der Kammer 8 ein Anschlagring 28 fixiert. Die der ersten Kammer 3 zugewandte Stirnfläche 10a des Steuerorgans 10 ist im vorliegenden Beispiel wesentlich kleiner als die der Steuerkammer 8 zugewandte Rückseite 10b. Im weiteren umfasst die Dämpfungseinrichtung 7 einen im Pufferstössel angeordneten Pumpraum 11 sowie ein in den Pumpraum 11 hineinragender, an der Pufferhülse 1 abgestützter Stössel 12. Der Pumpraum 11 ist ebenfalls mit Hydraulikflüssigkeit gefüllt und über einen Kanal 13 mit dem Raum 14 zwischen dem Trennkolben 9 und dem Steuerorgan 10 verbunden. Dieser Kanal 13 ist mit einer Einschnürung zum Begrenzen der pro Zeiteinheit von dem Pumpraum 11 in den dem Steuerorgan 10 vorgelagerten Raum 14 strömenden Menge an Hydraulikflüssigkeit versehen. Parallel zu dem Kanal 13 ist ein Rückschlagventil 25 angeordnet.

Der Pufferstössel 2 ist endseitig mit einem als Drossel wirkenden Flansch 17 versehen, der einen Teil einer hydraulischen Drosselanordnung 16 bildet. Der Flansch 17 begrenzt zwischen sich und der Wand 15 der in der Pufferhülse 1 angeordneten Kammer 3 einen ringförmigen Spalt 18. Ein weiteres Element der Drosselanordnung 16 bildet die Wand 15 der Kammer 3, deren Innendurchmesser nach rechts gegen das fahrzeugseitige Ende hin abnimmt, so dass sich der ringförmige Spalt 18 zwischen dem Flansch 17 und der Wand 15 mit zunehmender Einfederung des Pufferstössels 2 verkleinert. Der Flansch 17 ist im weiteren mit einem Ringkanal 19 versehen, von welchem zumindest eine radiale Bohrung 5a zu dem Durchlass 5 führt. In den Flansch 17 ist ein Rückschlagventil 20 eingelassen, welches eine Zurückströmen der Hydraulikflüssigkeit von der im Pufferstössel 2 angeordneten Kammer 4 in die in der Pufferhülse 1 angeordnete Kammer 3 ermöglicht. Der Pumpraum 11 ist über eine Leitung 22a mit einem Überdruckventil 23 verbunden ist. Die Leitung 22a mündet in dem dem Fahrzeug zugewandten Endbereich an der mit 27 bezeichneten Stelle in den Pumpraum 11. Namentlich mündet die Leitung 22a in einen Ringraum zwischen dem Stössel 12 und dem Pumpraum 11. Vom Überdruckventil 23 führt eine Leitung 22b in den unteren Teil der im Pufferstössel 2 angeordneten Kammer 4.

Der Raum 14 zwischen dem Trennkolben 9 und dem Steuerorgan 10 ist über ein Rückschlagventil 24 mit der Kammer 4 verbunden. Das Rückschlagventil 24 soll sicherstellen, dass in dem Raum 14 zwischen dem Trennkolben 9 und dem Steuerorgan 10 beim Ausfedern des Puffers schnell ein Druckausgleich stattfinden kann, indem Hydraulikflüssigkeit von der Kammer 4 in den Raum 14 einströmt. Um ein schnelles und sicheres Schliessen des Steuerorgans 10 zu begünstigen, kann ggf. eine Rückstellfeder 26 zwischen dem Anschlagring 28 und der Rückseite des Steuerorgans 10b eingespannt werden. Über das Rückschlagventil 25 wird sichergestellt, dass beim schnellen Ausfedern des Puffers bzw. bei einem schnellen Zurückziehen des Stössels 12 aus dem Pumpraum 11, der Pumpraum 11 über den Raum 14 nachgespeist wird.

Die Wirkungsweise dieses Puffers stellt sich beim quasistatischen Einfedern wie folgt dar: Bei einer auf den Pufferstössel 2 einwirkenden Druckkraft hat dieser die Tendenz, sich nach rechts in Richtung des Fahrzeugs zu verschieben. Dadurch erhöht sich der Druck in der in der Pufferhülse 1 angeordneten Kammer 3. Dieser Druck pflanzt sich über den ringförmigen Spalt 18, den radialen Kanal 5a und den Durchlass 5 bis zu der dem Durchlass 5 zugewandten Rückseite 10a des Steuerorgans 10 fort und beaufschlagt letzteren. Sobald die von der Hydraulikflüssigkeit auf die rechte Stirnfläche 10a des Steuerorgans 10 ausgeübte Kraft höher ist, als die durch den Gasdruck auf die Rückseite 10b des Steuerorgans 10 einwirkende Kraft (Reibung vernachlässigt), wird das Steuerorgan 10 nach links verschoben und hebt vom Ventilsitz 6 ab. Nun kann der Pufferstössel 2 einfedern, d.h. sich nach rechts verschieben und die Hydraulikflüssigkeit über den Ventilsitz 6 und den Ringraum 21 in die im Pufferstössel 2 angeordnete Kammer 4 einströmen. Durch die nach rechts gerichtete Bewegung des Pufferstössels 2 verkleinert sich das Volumen des Pumpraums 11, da der Stössel 12 weiter in den Pumpraum 11 eindringt. Dadurch steigt der Druck in dem Pumpraum 11 ebenfalls an. Über den Kanal 13 gleicht sich der Druck in dem zwischen dem Trennkolben 9 und dem Steuerorgan 10 angeordneten Raum 14 demjenigen in dem Pumpraum 11 an. Dadurch wird der Steuerorgan 10 in Schliessrichtung zusätzlich belastet, weil sich unter dem Einfluss des Hydraulikmediums der Trennkolben 9 nach links verschiebt und das Gasvolumen in der Kammer 8 verkleinert, wodurch die vom Pufferstössel 2 auf die Pufferhülse 1 übertragene Kraft progressiv ansteigt. Sobald der Druck in dem Pumpraum 11 beim Einschieben des Pufferstössels 2 einen vorgegebenen Maximalwert erreicht hat, öffnet das Überdruckventil 23. Durch dieses Mittel zur Druckbegrenzung wird die in Schliessrichtung auf den Steuerorgan 10 einwirkende Maximalkraft, und damit auch die vom Pufferstössel 2 auf die Pufferhülse 1 übertragene Maximalkraft, begrenzt, obwohl der Pufferstössel 2 sich weiter nach rechts bewegen kann. Indem die Leitung 22a von oben in den Ringraum zwischen dem Stössel 12 und dem Pumpraum 11 mündet, kann sichergestellt werden, dass bei einem Auflaufstoss zuerst das sich ggf. in dem Pumpraum 11 angesammelte Gas abgeleitet wird und somit die Steuerung bzw. der Pumpraum 11 intern entlüftet wird. Das Überdruckventil 23 spricht im Betrieb nur bei einem Auflaufstoss an. Die hohe Beschleunigung bei einem Auflaufstoss bewirkt, dass sich das Hydraulikmedium auf der dem Fahrzeug abgewandten linken Seite im Pumpraum 11 ansammelt, während sich das Gas im oberen Bereich auf der dem Fahrzeug zugewandten rechten Seite des Pumpraums 11 ansammelt. Aus diesem Grund mündet die Leitung 22a auf der dem Fahrzeug zugewandten Seite von oben in den Pumpraum 11.

Beim vorgängig beschriebenen, quasistatischen Einfedern des Pufferstössels 2 kann sich einerseits der Druck im Durchlass 5 demjenigen in der Kammer 3 der Pufferhülse 1 anpassen. Andererseits kann sich der Druck in der dem Steuerorgan 10 vorgelagerten Raum 14 über den Kanal 13 demjenigen in dem Pumpraum 11 anpassen. Anders verhält es sich beim dynamischen Einfedern des Pufferstössels 2.

Beim dynamischen Einfedern verhält sich der Puffer im ersten Moment in etwa gleich wie beim quasistatischen Einfedern, indem durch den Druckanstieg in der Kammer 3 der Pufferhülse 1 ein Abheben des Steuerorgans 10 vom Ventilsitz 6 bewirkt wird. Sobald jedoch der Pufferstössel 2 mit einer bestimmten Geschwindigkeit nach rechts verschoben wird, kann sich der Druck im Durchlass 5 demjenigen in der Kammer 3 der Pufferhülse 1 nicht mehr zeitgleich anpassen, da über den ringförmigen Spalt 18 zwischen dem Flansch 17 und der Kammerwand 15 eine Druckdifferenz entsteht in Abhängigkeit der Menge an Hydraulikflüssigkeit, die pro Zeiteinheit von der Kammer 3 in den Ringkanal 19 einströmt. Zudem kann sich der Druck in der dem Steuerorgan 10 vorgelagerten Raum 14 über den begrenzten Querschnitt des Kanals 13 demjenigen in den Pumpraum 11 ebenfalls nicht zeitgleich anpassen, da durch die den Querschnitt des Kanals 13 begrenzende Einschnürung nur eine sehr geringe Menge an Hydraulikflüssigkeit pro Zeiteinheit von dem Pumpraum 11 in den dem Steuerorgan 10 vorgelagerten Raum 14 einströmen kann. Dadurch öffnet zum einen das Überdruckventil 23 sehr schnell und zum anderen wird das Steuerorgan 10 in Schliessrichtung kaum zusätzlich belastet. Das Federverhalten beim dynamischen Einfedern unterscheidet sich damit grundlegend von demjenigen beim quasistatischen Einfedern. Es versteht sich, dass es einen fliessenden Übergang vom quasistatischen zum dynamischen Einfedern gibt. Auf diesen Übergangsbereich wird hier jedoch nicht näher eingegangen.

Fig. 2 zeigt anhand eines Kraft-Weg-Diagramms die Kennlinie des Puffers beim quasistatischen sowie beim dynamischen Einfedern. Mit s1 ist der statische Hub bezeichnet, während s2 den zusätzlichen Hub und s3 den Gesamthub bezeichnet. Der statische Hub s1 definiert, nach welchem Einfederweg welche Kraft vom Pufferstössel auf die Pufferhülse übertragen werden muss. Die statische Kennlinie wird normalerweise durch eine Vorgabe wie beispielsweise eine UIC-Richtlinie bestimmt. Wie aus der statischen Kennlinie K1 ersichtlich ist, steigt die vom Pufferstössel auf die Pufferhülse übertragene Kraft zu Beginn des Einfedervorgangs progressiv bis zu einem Maximalwert M1 am Ende des statischen Hubs s1 an. Danach verläuft die Kraft entlang der Kennlinie K2 über den zusätzlichen Hub s2 konstant weiter bis zu einem theoretischen Endanschlag. Der Maximalwert M1 wird weitgehend durch den Ansprechwert des Überdruckventils 23 bestimmt. Die Kennlinie K3 zeigt das Federverhalten des Puffers bei dynamischer Belastung. Anhand der dynamischen Kennlinie K3 ist ersichtlich, dass die Kraft am Anfang des Einfedervorgangs sehr schnell ansteigt, um danach auf einem im wesentlichen konstanten Niveau zu verharren und über eine relativ lange Hubbewegung auf die Pufferhülse übertragen zu werden. Je nach Dimensionierung der Regelelemente kann die Maximalkraft der dynamischen Kennlinie K3 bei tiefen Geschwindigkeiten die Kennlinie K1 auch unterschreiten, während sie bei höheren Geschwindigkeiten die Kennlinie K2 auch überschreiten kann.

Das vorgängige Diagramm steht jedoch nur beispielhaft für eine bestimmte Auslegung des Puffers. Durch die Abstimmung der einzelnen Parameter wie vorherrschender Gasdruck in der Kammer 4, Überdruck in der Steuerkammer 8, Verhältnis von rechter Stirnfläche 10a zu linker Stirnfläche 10b (Rückseite) des Steuerorgans 10, Volumenverminderung des Pumpraums 11 beim Einfedern des Pufferstössels 2, Volumen des dem Steuerorgan 10 vorgelagerten Raums 14 sowie Ansprechwert des Überdruckventils 23, kann das Verhalten des Puffers beim quasistatischen Einfedern massgeblich beeinflusst werden. Vorgängige Aufzählung ist dabei keinesfalls als abschliessend zu betrachten, sondern soll nur die wichtigsten bzw. einige wichtige Parameter wiedergeben. Namentlich kann durch Verändern der genannten Parameter der Kraftanstieg bezogen auf den Einfederhub sowie die Maximalkraft beim Einfedern des Pufferstössels beeinflusst werden. Ein besonderer Vorteil des erfindungsgemäss gestalteten Puffers besteht darin, dass der Kraftanstieg K1.1 sowie die Maximalkraft K2 unabhängig sind vom Gesamthub.

Beim dynamischen Einfedern kommt insbesondere dem Ansprechwert des Überdruckventils 23, dem absoluten Querschnitt und der Querschnittsveränderung des ringförmigen Spalts 18 beim Einschieben des Pufferstössels 2 sowie dem Querschnitt des Kanals 13 besondere Bedeutung zu.

Unter quasistatischem Einfedern sind Einfedervorgänge zu verstehen, bei denen die mittlere Einschubgeschwindigkeit des Pufferstössels einen Wert in der Grössenordnung von ca. 0.01-0.05m/s nicht überschreitet. Unter dynamischem Einfedern sind Einfedervorgänge zu verstehen, bei denen die mittlere Einschubgeschwindigkeit des Pufferstössels einen Wert von ca. 1 m/s überschreitet. Bezogen auf das vorliegende Ausführungsbeispiel liegt der Übergangsbereich somit zwischen ca. 0.05 und 1 m/s.

Da die zweite Kammer 4 mittels eines Gases unter Überdruck gesetzt ist, und das Gas beim Einfedern weiter komprimiert wurde, federt der Puffer bei nachlassender Belastung wieder aus. Sobald der Druck in der zweiten, im Pufferstössel 2 angeordneten Kammer 4 höher ist als in der in der Pufferhülse 1 angeordnete Kammer 3, öffnet das in den Flansch 17 eingelassene Rückschlagventil 20. Über das geöffnete Rückschlagventil kann nun Hydraulikflüssigkeit von der zweiten Kammer 4 in die erste Kammer 3 strömen, wodurch sich der Pufferstössel nach links bis an einen nicht dargestellten Endanschlag verschiebt. Bei diesem Ausfedervorgang vergrössert sich durch den aus dem Pumpraum 11 ausfahrenden Stössel 12 auch das Volumen des Pumpraums 11 kontinuierlich, was zu einem Nachsaugen von Hydraulikflüssigkeit aus der Kammer 14 führt.

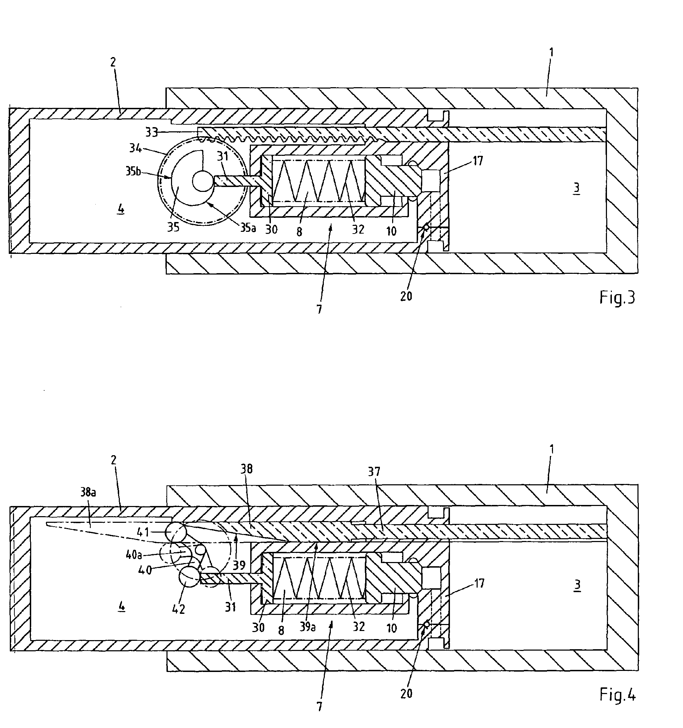

Die Fig. 3 zeigt einen Längsschnitt durch ein alternatives Ausführungsbeispiel eines Puffers, wobei gleiche Teile mit identischen Bezugszeichen versehen sind. Anstelle der vorgängig beschriebenen gas-hydraulischen Steuerung sind bei diesem Beispiel vorwiegend mechanische Elemente zur Steuerung der Dämpfungseinrichtung 7 vorgesehen. In der Steuerkammer 8 ist ein Kolben 30 angeordnet, welcher mit einer aus der Steuerkammer 8 herausragenden Kolbenstange 31 versehen ist. Zwischen dem Kolben 30 und dem Steuerorgan 10 ist eine Feder 32 eingespannt, die vorzugsweise aus Stahl besteht. Anstelle einer Stahlfeder 32 kann beispielsweise auch eine Elastomerfeder eingesetzt werden. Im weiteren ist eine an der Pufferhülse 1 fixierte Zahnstange 33 vorgesehen, die in die zweite Kammer 4 des Pufferstössels 2 hineinragt. Die Zahnstange 33 steht in Wirkverbindung mit einem Zahnrad 34, das mit einem Exzenter 35 versehen ist. Das Zahnrad 34 ist drehbar an dem Pufferstössel 2 fixiert. Der Kolben 30 stützt sich mit seiner Kolbenstange 31 an dem Exzenter 35 des Zahnrads 34 ab. Der Exzenter 35 ist mit einem im Durchmesser kontinuierlich ansteigenden Einlaufbereich 35a versehen, der in einen zylindrischen Bereich 35b übergeht. Beim Einfedern des Pufferstössels 2 findet eine Relativverschiebung zwischen dem Zahnrad 34 und der Zahnstange 33 statt, wodurch das Zahnrad 34 im Gegenuhrzeigersinn verdreht wird. Durch das Verdrehen des Zahnrads 34 im Gegenuhrzeigersinn wird die Vorspannung der Feder 32 verändert, indem der Kolben 30 durch den Exzenter 35 nach rechts verschoben wird. Der Exzenter 35 ist dabei so gestaltet, dass der Kolben 30 am Anfang der Drehbewegung des Zahnrads 34, durch den im Durchmesser ansteigenden Einlaufbereich 35a, vergleichsweise schnell nach rechts verschoben wird. Sobald jedoch das Zahnrad 34 soweit verdreht wurde, dass sich die Kolbenstange 31 am zylindrischen Bereich 35b des Exzenters 35 abstützt, wird die Federvorspannung nicht mehr verändert, sondern bleibt konstant, auch wenn der Pufferstössel 2 weiter eingeschoben wird. Es versteht sich, dass die gezeigte Ausbildung des Exzenters 35 lediglich beispielhaften Charakter hat. Durch die Gestaltung des Exzenters 35 kann denn auch direkt Einfluss auf die Federcharakteristik des Puffers genommen werden. Es versteht sich, dass beim dynamischen Einfedern des Pufferstössels 2 der Flansch 17 auch hier als Drossel in dem vorgängig beschriebenen Sinn wirkt.

Die Fig. 4 zeigt einen Längsschnitt durch ein weiteres alternatives Ausführungsbeispiel eines Puffers, wobei gleiche Teile wiederum mit identischen Bezugszeichen versehen sind. Auch in diesem Beispiel sind vorwiegend mechanische Elemente zur Steuerung der Dämpfungseinrichtung 7 vorgesehen. Zur Veränderung der Vorspannung der zwischen dem Kolben 30 und dem Steuerorgan 10 eingespannten Stahlfeder 32 ist eine an der Pufferhülse 1 fixierte Steuerstange 37 vorgesehen, deren Vorderteil 38 auf der Unterseite mit einer konischen Steuerfläche 39 versehen ist. Die Steuerfläche 39 der Steuerstange 37 steht über einen Steuerhebel 40 mit der Kobenstange 31 des Kolbens 30 in Wirkverbindung. Der Steuerhebel 40 ist an beiden Hebelenden mit je einer Rolle 41, 42 versehen. Beim Einfedern des Pufferstössels 2 findet auch hier eine Relativverschiebung zwischen dem Steuerhebel 40 und der Steuerstange 37 statt, wodurch der Steuerhebel 40 im Gegenuhrzeigersinn verdreht und die Federvorspannung verändert wird, indem der Steuerhebel 40 den Kolben 30 nach rechts verschiebt. Die Lage des Vorderteils 38a der Steuerstange in Relation zum Hebel 40a bei eingeschobenem Pufferstössel 2 ist durch strichpunktierte Linien angedeutet. Durch die Gestaltung des Steuerhebels 40 und der Steuerfläche 38 kann wiederum direkt Einfluss auf die Federcharakteristik des Puffers genommen werden. Indem die konische Steuerfläche 39 am Ende in einen horizontalen Bereich 39a übergeht, wird auch hier die maximale Vorspannung der Feder 32 begrenzt und ein sehr langer Einfederhub des Puffers ermöglicht.

Obwohl vorstehend immer von einem Puffer die Rede ist, ist der Begriff "Puffer" nicht zwingend im Sinne eines herkömmlichen Eisenbahn-Puffers zu verstehen. Vielmehr kann ein solcher Puffer beispielsweise auch als Dämpfungselement in einer Kupplung eingesetzt werden, zumal Kupplungen für Schienenfahrzeuge grosse Kräfte aufnehmen können müssen. Mit dem vorgängig beschriebenen Puffer können insbesondere auch hohe Energien reversibel aufgenommen und über einen langen Federhub abgefangen werden.

## Patentansprüche

1. Puffer für Schienenfahrzeuge, mit einer Pufferhülse (1) und einem relativ dazu verschiebbaren Pufferstössel (2), einer ersten, zumindest teilweise mit einem Hydraulikmedium gefüllten Kammer (3), die sich mit zunehmender Einfederung des Pufferstössels (2) verkleinert und einer zweiten, zumindest teilweise mit einem Hydraulikmedium gefüllten Kammer (4), welche über einen von einem Steuerorgan (10) verschliessbaren Durchlass (5) mit der ersten Kammer (3) in Verbindung steht, **dadurch gekennzeichnet, dass** in Schliessrichtung auf das Steuerorgan (10) einwirkende Mittel vorgesehen sind, welche die auf das Steuerorgan (10) einwirkende Schliesskraft beim Einfedern des Puffers in Abhängigkeit des Einschubhubs und/oder der zu verzögernden Masse und/oder der Einschubgeschwindigkeit verändern.

2. Puffer nach Anspruch 1, **dadurch gekennzeichnet, dass** die Mittel derart ausgebildet sind, dass die in Schliessrichtung auf das Steuerorgan (10) einwirkende Schliesskraft weitgehend unabhängig ist, von dem in der zweiten Kammer (4) vorherrschenden Druck.

3. Puffer nach Anspruch 1 oder 2, **dadurch gekennzeichnet, dass** das Steuerorgan (10) mittels einer Gasfeder (8a), einer Stahlfeder (32) oder einer Elastomerfeder, unabhängig von dem in der zweiten Kammer (4) vorherrschenden Druck, in Schliessrichtung vorgespannt ist.

4. Puffer nach Anspruch 2 oder 3, **dadurch gekennzeichnet, dass** eine von der ersten und zweiten Kammer (3, 4) unabhängige Steuerkammer (8) zur Aufnahme des Steuerorgans (10) und der zum Vorspannen des Steuerorgans (10) notwendigen Gasfeder (8a), Stahlfeder (32) oder Elastomerfeder vorgesehen ist.

5. Puffer nach einem der vorhergehenden Ansprüche, **dadurch gekennzeichnet, dass** in der Steuerkammer (8) ein Kolben (30) aufgenommen ist und zwischen dem Kolben (30) und dem Steuerorgan (10) eine Stahlfeder (32) eingespannt ist, deren Vorspannung mittels des Kolbens (30) veränderbar ist.

6. Puffer nach Anspruch 5, **dadurch gekennzeichnet, dass** der Kolben (30) mit einer die Steuerkammer (8) nach aussen überragenden Kolbenstange (31) versehen ist, welche an einem mechanischen Element, insbesondere einem Exzenter (35) oder Hebel (40) abgestützt ist, wobei das mechanische Element (35, 40) den Kolben (30) beim Einfedern des Pufferstössels (2) in Abhängigkeit des Einschubhubs verschiebt.

7. Puffer nach Anspruch 6, **dadurch gekennzeichnet, dass** das mechanische Element (35, 40) mittels einer Zahnstange (33) oder einer Keilfläche (39) verdrehbar ist.

8. Puffer nach einem der vorhergehenden Ansprüche, **dadurch gekennzeichnet, dass** Mittel (23, 35b, 39a) zum Begrenzen der in Schliessrichtung auf das Steuerorgan (10) einwirkenden Maximalkraft vorgesehen sind.

9. Puffer nach einem der Ansprüche 1 bis 4, **dadurch gekennzeichnet, dass** die Dämpfungseinrichtung (7) eine dem Steuerorgan (10) vorgeschaltete Drosselanordnung (16) aufweist, welche beim Einfedern des Pufferstössels (2) eine Öffnung (18), über die das Hydraulikmedium von der ersten Kammer (3) zu dem Durchlass (5) strömen kann, kontinuierlich verkleinert.

10. Puffer nach einem der Ansprüche 1 bis 4 oder 9, **dadurch gekennzeichnet, dass** das Steuerorgan (10) pneumatisch oder mechanisch in Schliessrichtung vorgespannt ist, und dass zumindest beim quasistatischen Einfedern des Pufferstössels (2) Hydraulikflüssigkeit aus einem sich mit zunehmender Einfederung verkleinernden Pumpraum (11) über einen Kanal (13) derart in einen dem Steuerorgan (10) vorgelagerten Raum (14) eingeleitet wird, dass das Steuerorgan (10) zusätzlich zur Vorspannung in Schliessrichtung belastet wird.

11. Puffer nach Anspruch 10, **dadurch gekennzeichnet, dass** der von dem Pumpraum (11) zu dem dem Steuerorgan (10) vorgelagerten Raum (14) führende Kanal (13) als hydraulische Drossel ausgebildet oder mit einer als hydraulische Drossel wirkenden Einschnürung zum Begrenzen der pro Zeiteinheit durchströmenden Menge an Hydraulikflüssigkeit versehen ist, so dass sich der Druck in der dem Steuerorgan (10) vorgelagerten Raum (14), beim quasistatischen Einfedern des Pufferstössels (2), zumindest annähernd demjenigen des Pumpraums (11) angleichen kann, während sich der Druck in der dem Steuerorgan (10) vorgelagerten Raum (14), beim dynamischen Einfedern des Pufferstössels (2), aufgrund des begrenzten Querschnitts des Kanals (13) nicht oder nur verzögert angleicht.

12. Puffer nach Anspruch 10 oder 11, **dadurch gekennzeichnet, dass** der Pumpraum (11), als Mittel zum Begrenzen der in Schliessrichtung zusätzlich auf das Steuerorgan (10) einwirkenden Kraft, eine mittels eines Überdruckventils (23) verschliessbare Ablassöffnung (27) aufweist.

13. Puffer nach einem der Ansprüche 10 bis 12 **dadurch gekennzeichnet, dass** der Pumpraum (11) als separater Raum ausgebildet ist, und dass ein in den Pumpraum (11) ragender Stössel (12) vorgesehen, welcher beim Einfedern des Pufferstössels (2) eine Relativbewegung zu dem Pumpraum (11) ausführt, um deren Volumen zu verkleinern.

14. Puffer nach einem der Ansprüche 10 bis 13 **dadurch gekennzeichnet, dass** der der dem Steuerorgan (10) vorgelagerte Raum (14) über ein Rückschlagventil (24) derart mit der zweiten Kammer (4) verbunden ist, dass beim Ausfedern des Pufferstössels (2) die beim Einfedervorgang verdrängte Hydraulikflüssigkeit wieder in den Raum (14) nachströmen kann.

15. Puffer nach einem der Ansprüche 10 bis 14 **dadurch gekennzeichnet, dass** die zweite Kammer (4) über einen mit einem Ventilsitz (6) versehenen Durchlass (5) mit der ersten Kammer (3) verbunden ist und das Steuerorgan (10) gegen diesen Ventilsitz (6) vorgespannt ist.

16. Puffer nach einem der Ansprüche 10 bis 15, **dadurch gekennzeichnet, dass** eine mittels eines Gases unter Überdruck gesetzte Steuerkammer (8) vorgesehen ist, die mit einem Trennkolben (9) versehen ist, der die Kammer in einen Gasraum und den dem Steuerorgan (10) vorgelagerten Raum (14) unterteilt.

17. Puffer nach einem der Ansprüche 10 bis 16, **dadurch gekennzeichnet, dass** die Drosselanordnung (16) einen kreisförmigen Flansch (17) aufweist, welcher zwischen sich und Wand (15) der ersten Kammer (3) die Öffnung in Form eines ringförmigen Spalts (18) begrenzt, wobei sich der Innendurchmesser der Kammer (3) zum fahrzeugseitigen Ende hin derart vermindert, dass sich der ringförmige Spalt (18) zwischen dem Flansch (17) und der Wand (15) der Kammer (3) mit zunehmender Einfederung des Pufferstössels (2) verkleinert wird.

## Claims

1. Buffer for rail vehicles, having a buffer sleeve (1) and a buffer ram (2) which can be moved relative to it, having a first chamber (3) which is at least partially filled with a hydraulic medium and decreases in size as the inward springing of the buffer ram (2) increases, and having a second chamber (4), which is at least partially filled with a hydraulic medium and is connected to the first chamber (3) via an aperture (5) which can be closed by a control member (10), **characterized in that** means which act on the control member (10) are provided in the closing direction and vary the closing force that acts on the control member (10) while the buffer is springing in as a function of the inward movement distance and/or the mass to be decelerated and/or the insertion speed.

2. Buffer according to Claim 1, **characterized in that** the means are designed such that the closing force which acts on the control member (10) in the closing direction is largely independent of the pressure in the second chamber (4).

3. Buffer according to Claim 1 or 2, **characterized in that** the control member (10) is prestressed in the closing direction by means of a gas spring (8a), a steel spring (32) or an elastomer spring, independently of the pressure in the second chamber (4).

4. Buffer according to Claim 2 or 3, **characterized in that** a control chamber (8) which is independent of the first and second chambers (3, 4) is provided in order to accommodate the control member (10) and the gas spring (8a), steel spring (32) or elastomer spring which is necessary in order to prestress the control member (10).

5. Buffer according to one of the preceding claims, **characterized in that** a piston (30) is accommodated in the control chamber (8), and a steel spring (32), whose prestressing can be varied by means of the piston (30), is clamped between the piston (30) and the control member (10).

6. Buffer according to Claim 5, **characterized in that** the piston (30) is provided with a piston rod (31) which projects outwards from the control chamber (8) and is supported on a mechanical element, in particular an eccentric (35) or a lever (40), with the mechanical element (35, 40) moving the piston (30) as a function of the insertion movement while the buffer ram (2) is springing inwards.

7. Buffer according to Claim 6, **characterized in that** the mechanical element (35, 40) can be rotated by means of a toothed rod (33) or a wedge surface (39).

8. Buffer according to one of the preceding claims, **characterized in that** means (23, 35b, 39a) are provided in order to limit the maximum force acting on the control member (10) in the closing direction.

9. Buffer according to one of Claims 1 to 4, **characterized in that** the damping device (7) has a restriction arrangement (16) upstream of the control member (10), which restriction arrangement (16) continuously reduces the size of an opening (18), via which the hydraulic medium can flow from the first chamber (3) to the aperture (5), while the buffer ram (2) is springing inwards.

10. Buffer according to one of Claims 1 to 4 or 9, **characterized in that** the control member (10) is pneumatically or mechanically prestressed in the closing direction, and **in that** at least while the buffer ram (2) is springing in quasi-statically, hydraulic fluid is introduced from a pump area (11), whose size decreases as the inward springing increases, via a channel (13) into an area (14) in front of the control member (10), such that the control member (10) is additionally loaded for prestressing in the closing direction.

11. Buffer according to Claim 10, **characterized in that** the channel (13) which leads from the pump area (11) to the area (14) in front of the control member (10) is in the form of a hydraulic restrictor or is provided with a constriction, which acts as a hydraulic restrictor, to limit the amount of hydraulic fluid which flows through it per unit time, such that the pressure in the area (14) in front of the control member (10) while the buffer ram (2) is springing in quasi-statically can at least approximately match that in the pump area (11), while the pressure in the area (14) in front of the control member (10) while the buffer ram (2) is springing in dynamically is not matched, or is matched only with a delay, owing to the limited cross section of the channel (13).

12. Buffer according to Claim 10 or 11, **characterized in that** the pump area (11) has an outlet opening (27) which can be closed by means of an overpressure valve (23), as means for limiting the force which additionally acts on the control member (10) in the closing direction.

13. Buffer according to one of Claims 10 to 12, **characterized in that** the pump area (11) is a separate area, and **in that** a ram (12) is provided, which projects into the pump area (11) and carries out a relative movement with respect to the pump area (11) while the buffer ram (2) is springing inwards, in order to reduce the volume of the pump area (11).

14. Buffer according to one of Claims 10 to 13, **characterized in that** the area (14) in front of the control member (10) is connected via a non-return valve (24) to the second chamber (4) such that, while the buffer ram (2) is springing outwards, the hydraulic fluid which was displaced during the springing-in process can flow back into the area (14) again.

15. Buffer according to one of Claims 10 to 14, **characterized in that** the second chamber (4) is connected to the first chamber (3) via an aperture (5) which is provided with a valve seat (6), and the control member (10) is prestressed against this valve seat (6).

16. Buffer according to one of Claims 10 to 15, **characterized in that** a control chamber (8) is provided, which can be raised to an increased pressure by means of a gas and is provided with a separating piston (9), which subdivides the chamber into a gas area and the area (14) in front of the control member (10).

17. Buffer according to one of Claims 10 to 16, **characterized in that** the restriction arrangement (16) has a circular flange (17) which bounds the opening in the form of an annular gap (18) between itself and the wall (15) of the first chamber (3), with the internal diameter of the chamber (3) decreasing towards the vehicle end such that the annular gap (18) between the flange (17) and the wall (15) of the chamber (3) is reduced in size as the inward springing of the buffer ram (2) increases.

## Revendications

1. Tampon pour véhicules ferroviaires, avec un faux-tampon (1) et une tige de tampon (2) pouvant se déplacer par rapport à celui-ci, une première chambre (3) remplie au moins partiellement d'un fluide hydraulique, qui se réduit lorsque la compression de la tige de tampon (2) augmente et une seconde chambre (4) remplie au moins partiellement d'un fluide hydraulique qui est en liaison avec la première chambre (3) par le biais d'un passage (5) pouvant être fermé par un organe de commande (10), **caractérisé en ce que** des moyens agissant dans le sens de fermeture sur l'organe de commande (10) sont prévus, lesquels modifient la force de fermeture agissant sur l'organe de commande (10) lors de la compression du tampon en fonction de la course d'introduction et/ou de la masse à ralentir et/ou de la vitesse d'introduction.

2. Tampon selon la revendication 1, **caractérisé en ce que** les moyens sont réalisés de telle sorte que la force de fermeture agissant dans le sens de fermeture sur l'organe de commande (10) soit largement indépendante de la pression régnant dans la seconde chambre (4).

3. Tampon selon la revendication 1 ou 2, **caractérisé en ce que** l'organe de commande (10) est précontraint dans le sens de fermeture au moyen d'un ressort à gaz (8a), d'un ressort d'acier (32) ou d'un ressort en élastomère, indépendamment de la pression régnant dans la seconde chambre (4).

4. Tampon selon la revendication 2 ou 3, **caractérisé en ce qu'**une chambre de commande (8) indépendante de la première et de la seconde chambres (3, 4) est prévue pour recevoir l'organe de commande (10) et le ressort à gaz (8a), le ressort d'acier (32) ou le ressort en élastomère nécessaire à la précontrainte de l'organe de commande (10).

5. Tampon selon l'une quelconque des revendications précédentes, **caractérisé en ce qu'**un piston (30) est logé dans la chambre de commande (8) et un ressort d'acier (32) est serré entre le piston (30) et l'organe de commande (10), dont la précontrainte peut être modifiée au moyen du piston (30).

6. Tampon selon la revendication 5, **caractérisé en ce que** le piston (30) est pourvu d'une tige de piston (31) dépassant la chambre de commande (8) vers l'extérieur, laquelle est en appui contre un élément mécanique, notamment une excentrique (35) ou un levier (40), l'élément mécanique (35, 40) déplaçant le piston (30) lors de la compression de la tige de tampon (2) en fonction de la course d'introduction.

7. Tampon selon la revendication 6, **caractérisé en ce que** l'élément mécanique (35, 40) peut être pivoté au moyen d'une crémaillère (33) ou d'une face biaise (39).

8. Tampon selon l'une quelconque des revendications précédentes, **caractérisé en ce que** des moyens (23, 35b, 39a) sont prévus pour limiter la force maximale agissant dans le sens de fermeture sur l'organe de commande (10).

9. Tampon selon l'une quelconque des revendications 1 à 4, **caractérisé en ce que** le dispositif d'amortissement (7) présente un ensemble d'étranglement (16) monté en amont de l'organe de commande (10), lequel ensemble réduit en continu lors de la compression de la tige de tampon (2) une ouverture (18), par laquelle le fluide hydraulique peut s'écouler de la première chambre (3) vers le passage (5).

10. Tampon selon l'une quelconque des revendications 1 à 4 ou 9, **caractérisé en ce que** l'organe de commande (10) est précontraint pneumatiquement ou mécaniquement dans le sens de fermeture, et **en ce qu'**au moins lors de la compression quasi-statique de la tige de tampon (2), du liquide hydraulique est introduit depuis une chambre de pompage (11) se réduisant lorsque la compression augmente par le biais d'un canal (13) dans une chambre (14) logée en amont de l'organe de commande (10) de telle sorte que l'organe de commande (10) soit chargé en outre dans le sens de fermeture pour la précontrainte.

11. Tampon selon la revendication 10, **caractérisé en ce que** le canal (13) menant de la chambre de pompage (11) à la chambre (14) logée en amont de l'organe de commande (10) est réalisé comme un étranglement hydraulique ou est pourvu d'un rétrécissement agissant comme un étranglement hydraulique pour limiter la quantité de liquide hydraulique s'écoulant par unité de temps, de sorte que la pression puisse s'adapter dans la chambre (14) logée en amont dé l'organe de commande (10), lors de la compression quasi-statique de la tige de tampon (2), au moins approximativement à celle de la chambre de pompage (11), alors que la pression dans la chambre (14) logée avant l'organe de commande (10) ne s'adapte pas ou seulement de façon différée lors de la compression dynamique de la tige de tampon (2) en raison de la section limitée du canal (13).

12. Tampon selon la revendication 10 ou 11, **caractérisé en ce que** la chambre de pompage (11) présente comme moyen de limitation de la force agissant dans le sens de fermeture en outre sur l'organe de commande (10) un orifice d'évacuation (27) pouvant être fermé au moyen d'une soupape de surpression (23).

13. Tampon selon l'une quelconque des revendications 10 à 12, **caractérisé en ce que** la chambre de pompage (11) est réalisée comme une chambre séparée, et **en ce qu'**une tige (12) dépassant dans la chambre de pompage (11) est prévue, laquelle réalise lors de la compression de la tige de tampon (2) un mouvement relatif vers la chambre de pompage (11) afin de réduire son volume.

14. Tampon selon l'une quelconque des revendications 10 à 13, **caractérisé en ce que** la chambre (14) logée en amont de l'organe de commande (10) est reliée par le biais d'un clapet anti-retour (24) à la seconde chambre (4), de telle sorte que lors du débattement de la tige de tampon (2), le liquide hydraulique refoulé lors du processus de compression puisse de nouveau s'écouler dans la chambre (14).

15. Tampon selon l'une quelconque des revendications 10 à 14, **caractérisé en ce que** la seconde chambre (4) est reliée à la première chambre (3) par le biais d'un passage (5) pourvu d'un siège de soupape (6) et l'organe de commande (10) est précontraint contre ce siège de soupape (6).

16. Tampon selon l'une quelconque des revendications 10 à 15, **caractérisé en ce qu'**une chambre de commande (8) soumise à une surpression au moyen d'un gaz est prévue, laquelle est pourvue d'un piston séparateur (9) qui divise la chambre en une chambre à gaz et en la chambre (14) logée en amont de l'organe de commande (10).

17. Tampon selon l'une quelconque des revendications 10 à 16, **caractérisé en ce que** l'ensemble d'étranglement (16) présente une bride (17) circulaire qui limite entre la paroi (15) de la première chambre (3) et elle-même l'orifice sous la forme d'une fente annulaire (18), le diamètre interne de la chambre (3) se réduisant vers l'extrémité côté véhicule de telle sorte que la fente (18) annulaire entre la bride (17) et la paroi (15) de la chambre (3) soit réduite lorsque la compression de la tige de tampon (2) augmente.
